# EUROPÄISCHE PATENTSCHRIFT

(11) **EP 1 283 005 B1**
(45) Veröffentlichungstag und Bekanntmachung des Hinweises auf die Patenterteilung: **24.03.2004**
(21) Anmeldenummer: 01940354.2
(22) Anmeldetag: 23.04.2001
(51) Int. Cl.: H05B 3/34

(54) **KOMBINIERTES SENSOR- UND HEIZELEMENT**
COMBINED SENSOR AND HEATING ELEMENT
ELEMENT DETECTEUR ET CHAUFFANT COMBINE

(30) Priorität: 17.05.2000 LU 90583
(43) Veröffentlichungstag der Anmeldung: 12.02.2003
(73) Patentinhaber: IEE INTERNATIONAL ELECTRONICS & ENGINEERING S.A., 6468 Echternach (LU)
(72) Erfinder: SCHMIZ, Marc, L-2629 Luxembourg (LU); SCHOCKMEL, Paul, L-8216 Mamer (LU)
(74) Vertreter: Beissel, Jean
(86) Internationale Anmeldenummer: PCT/EP2001/004549
(87) Internationale Veröffentlichungsnummer: WO 2001/089267

(56) Entgegenhaltungen:
- DE-A- 19 813 559
- DE-C- 19 717 273
- US-A- 4 628 188
- US-A- 5 835 983

## Beschreibung

Die vorliegende Erfindung betrifft ein kombiniertes Sensor- und Heizelement, insbesondere zum Einsatz in einem Fahrzeugsitz.

Moderne Fahrzeuge werden immer häufiger z.B. mit sogenannten Sitzbelegungssensoren ausgestattet, die bei einem Unfall ein Auslösen des einem bestimmten Fahrzeugsitzes zugeordneten Airbags verhindern, falls der entsprechende Fahrzeugsitz nicht belegt ist. Solche Sitzbelegungssensoren umfassen häufig eine Sensormatte mit mehreren drucksensiblen Bereichen, die untereinander durch flexible Verbindungsstreifen verbunden sind. Die Sensormatte wird derart in den Fahrzeugsitz integriert, dass die drucksensiblen Bereiche über die Sitzfläche des Fahrzeugsitzes verteilt sind.

Die gesteigerten Komfortansprüche der Verbraucher führen überdies dazu, dass immer mehr Fahrzeugsitze mit einer Sitzheizung ausgestattet werden. Eine solche Sitzheizung umfasst im allgemeinen eine Heizmatte aus einem in zwei Vliesstofflagen eingebetteten Heizleiter. Auch eine solche Heizmatte wird in die Sitzfläche des Fahrzeugsitzes integriert, so dass sich der Heizleiter im wesentlichen über die gesamte Sitzfläche des Fahrzeugsitzes erstreckt.

Bei Fahrzeugsitzen, die sowohl mit einem Sitzbelegungssensor als auch mit einer Sitzheizung ausgestattet werden, werden die Sensormatte und die Heizmatte vor dem Einbau in den Sitz zu einem kombinierten Sensor- und Heizelement zusammengefügt. Die Herstellung eines solchen kombinierten Sensor- und Heizelementes ist jedoch verhältnismäßig aufwendig, da die beiden Funktionselemente zunächst getrennt hergestellt werden und anschließend aufeinander fixiert werden müssen.

Das Dokument DE-A-197 17 273 beschreibt ein kombiniertes Sensor- und Heizelement. Das Sensorelement ist aus zwei zusammenlaminierten Trägerfolien aufgebaut, zwischen denen Kontaktanordnungen angeordnet sind. Die Kontaktanordnungen werden je nach Funktionsmodus des Schaltelementes als Heizleiter oder als Elektrodenanordnung zur Sitzbelegungserkennung benutzt.

### Aufgabe der Erfindung

Aufgabe der vorliegenden Erfindung ist es folglich, ein vereinfachtes kombiniertes Sensor- und Heizelement vorzuschlagen.

### Allgemeine Beschreibung der Erfindung

Diese Aufgabe wird erfindungsgemäß gelöst durch ein kombiniertes Sensorund Heizelement, mit einer Sensormatte mit mehreren aktiven Bereichen, die untereinander durch flexible Verbindungsstreifen verbunden sind, und einem Heizleiter, wobei der Heizleiter direkt auf die flexiblen Verbindungsstreifen der Sensormatte aufgebracht ist. Bei diesem Sensor- und Heizelement muss der Heizleiter demnach nicht gesondert in ein handhabbares Vlieslaminat eingebettet werden, das dann anschließend auf der Sensormatte fixiert wird. Die Herstellung eines solchen kombinierten Sensor- und Heizelementes erfordert demnach wesentlich weniger Einzelschritte als die Herstellung herkömmlicher Kombielemente. Überdies ist der Materialaufwand für die Herstellung des erfindungsgemäßen Funktionselementes geringer als dies bei herkömmlichen Funktionselemente der Fall ist. Das kombinierte Sensor- und Heizelement der vorliegenden Erfindung stellt demnach einen besonders einfaches und kostengünstiges Kombielement dar.

Es ist anzumerken, dass die aktiven Bereichen der Sensormatte drucksensible Bereiche umfassen können, d. h. dass sich zum Beispiel die elektrischen Eigenschaften der aktiven Bereiche in Abhängigkeit von der auf den Sensor ausgeübten Gewichtskraft verändern. In einer anderen Ausgestaltung können die aktiven Bereiche auch einfache Schaltelemente umfassen, die lediglich zwischen zwei Zuständen wie beispielsweise "belegt" und "nicht belegt" unterscheiden. Darüber hinaus ist es für die vorliegende Erfindung unerheblich, ob die Sensorfunktion des erfindungsgemäßen Sensor- und Heizelementes zur einfachen Erkennung einer Sitzbelegung oder zur Klassifizierung einer in dem Sitz einsitzenden Person dient. Mit anderen Worten, die Sensormatte kann sowohl einen einfachen Sitzbelegungssensor als auch einen Sensor zur Aufnahme bzw. Auswertung eines Druckprofils darstellen.

In dem Fall eines einfachen Sitzbelegungssensors, der sich im allgemeinen lediglich über die eigentliche Sitzfläche des Sitzes erstreckt, kann dieser zusätzliche flexible Streifen aufweisen, die sich über die Seitenwulste des Sitzes erstrecken. Solche flexiblen Streifen können einfach aus einer Trägerfolie des Sensors mit ausgestanzt werden und sind demnach einfach herzustellen. Der Heizleiter erstreckt sich dann vorteilhaft ebenfalls über diese zusätzlichen Sensorstreifen, so dass auch die Seitenwulste des Sitzes geheizt werden. Es ist anzumerken, dass in der zusätzlichen Streifen keine aktiven Bereiche des Sitzbelegungssensors angeordnet sein müssen.

In einer vorteilhaften Ausgestaltung der Erfindung ist der Heizleiter durch eine Schutzschicht abgedeckt. Diese Schutzschicht kann beispielsweise Kunststofffolie oder eine Vliesstofflage aufweisen, die vorzugsweise auf die flexiblen Verbindungsstreifen der Sensormatte auflaminiert ist.

Der Heizleiter selbst kann auf die flexiblen Verbindungsstreifen der Sensormatte aufgeklebt oder aufgedruckt werden. Im letzteren Fall weist der Heizleiter beispielsweise eine Halbleitertinte auf, die in einem Serigraphieverfahren auf die Verbindungsbahnen aufgebracht wird.

In einer besonders vorteilhaften Ausgestaltung weist der Heizleiter ein Widerstandsmaterial mit einem positiven Temperaturkoeffizienten auf. Derartige Widerstandsmaterialien weisen bei hohen Temperaturen einen höheren elektrischen Widerstand auf als bei niedrigen Temperaturen. Bei einer geeigneten Materialwahl kann dieser Effekt zur Begrenzung des Heizstromes ausgenutzt werden, so daß eine aufwendige nachgeschaltete Temperaturregelung für das Heizelement entfallen kann.

Die elektrischen Anschlüsse der Sensormatte und die elektrischen Anschlüsse des Heizleiters sind vorzugsweise an einer gleichen Anschlussfahne des kombinierten Sensor- und Heizelementes angeordnet. Hierdurch wird eine Kontaktierung der beiden getrennten Funktionen durch ein einziges Steckerelement ermöglicht und somit die spätere Montage wesentlich vereinfacht. In einer möglichen Ausgestaltung können die beiden getrennten Funktionselemente beispielsweise an eine gemeinsame Elektronik angeschlossen werden. Diese Elektronik dient dann sowohl zum Auswerten der Sensormatte als auch der Versorgung und Leistungsregelung der Heizmatte. Eine intelligente Steuerung kann hierbei beispielsweise verhindern, dass die Sitzheizung eingeschaltet wird, wenn der entsprechende Sitz nicht belegt ist.

Bei einer gemeinsamen Auswerte- und Versorgungsschaltung für die Sensormatte und die Heizmatte erfolgt die Heizungsansteuerung vorzugsweise gepulst und bezüglich der Sensorabfrage zeitlich versetzt. Hierdurch kann einerseits die Leistung der Auswerte- und Versorgungselektronik besser ausgenutzt werden, andererseits sind gegenseitige Störungen der beiden Systeme weitestgehend ausgeschlossen.

### Beschreibung anhand der Figuren

Im folgenden wird eine Ausgestaltung der Erfindung anhand der beiliegenden Figuren beschrieben. Es zeigen:
- Fig.1:: einen Schnitt durch eine Ausgestaltung eines kombinierten Sensor- und Heizelements;
- Fig.2:: eine Draufsicht auf eine Ausgestaltung eines kombinierten Sensor- und Heizelements.

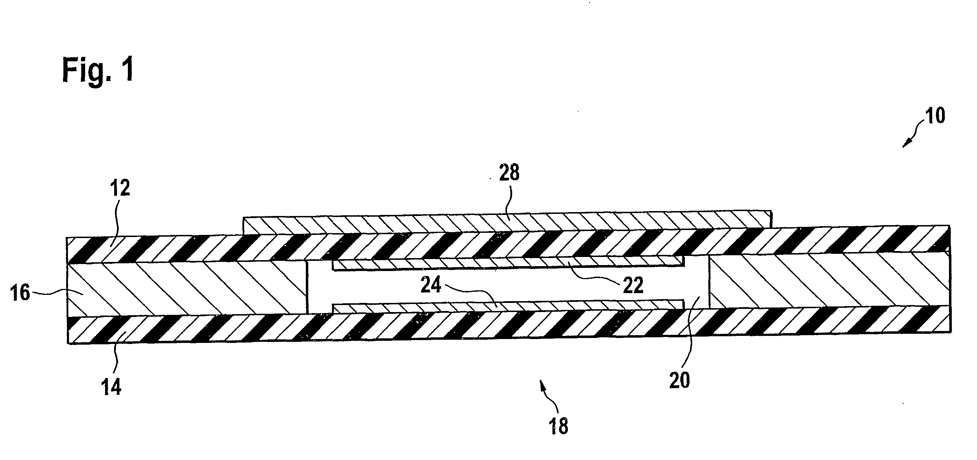

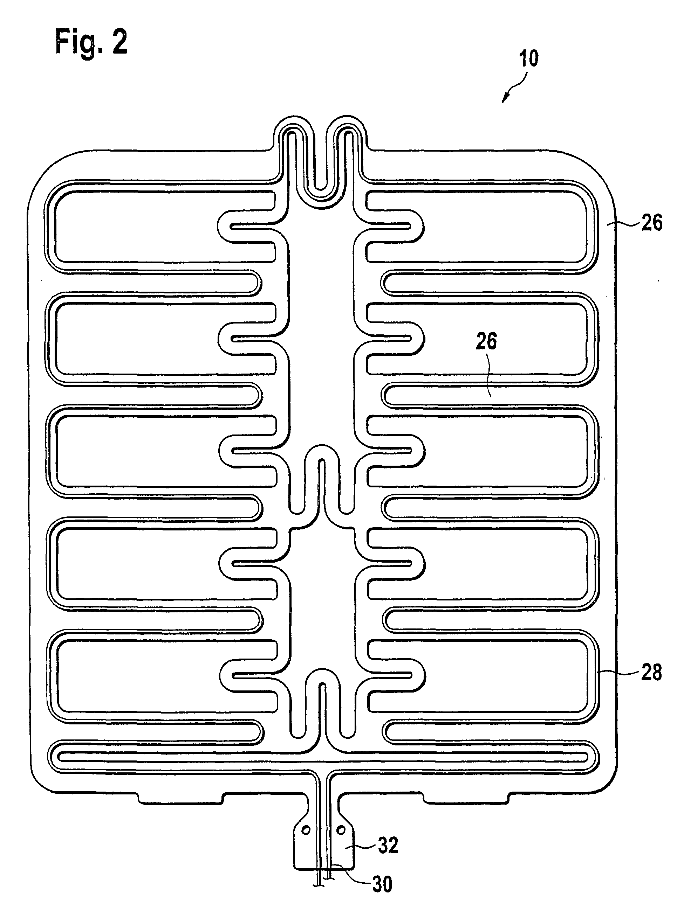

Sitzbelegungssensoren bzw. Sensoren zum Aufnehmen oder Auswerten eines Sitzprofils sind häufig als drucksensible Flächensensoren in Folienbauweise aufgebaut. Ein derartiger Sitzbelegungssensor umfasst im allgemeinen eine Vielzahl aktiver Bereiche, die über eine gewisse Flächen verteilt sind und untereinander durch flexible Verbindungsbahnen des Sensors verbunden sind. Ein solcher Sensor ist in den Figuren 1 und 2 dargestellt, wobei die Fig. 1 einen Schnitt durch einen aktiven Bereich des Sensors darstellt.

Der Sensor umfasst eine erste und eine zweite Trägerfolie 12 und 14, die mittels eines Abstandhalters 16, zum Beispiel einer doppelseitigen Klebefolie, zusammen laminiert sind. Im Bereich der aktiven Bereiche 18 des Sensors 10 weist der Abstandhalters 16 eine Ausnehmung 20 auf, so daß sich in diesem Bereich die beiden Trägerfolien 12 und 14 beabstandet gegenüberstehen.

In dem aktiven Bereich 18 des Sensors sind auf der Innenseite der Trägerfolien 12 und 14 Kontaktanordnungen 22 und 24 angeordnet, zwischen denen beim Zusammendrücken der beiden Trägerfolien ein elektrischer Kontakt hergestellt wird. Die Kontaktanordnungen 22 bzw. 24 können beispielsweise Elektrodenstrukturen umfassen, wobei zumindest eine der Kontaktanordnungen zusätzlich eine Schicht aus einem druckempfindlichen Material aufweist. Die Kontaktanordnungen werden beispielsweise vor dem Zusammenlaminieren der Trägerfolien in einem Siebdruckverfahren auf die entsprechenden Flächen der Trägerfolien aufgebracht.

Aus dem so hergestellten Sandwichaufbau werden anschließend Bereiche ausgestanzt, in denen keine aktive Bereiche des Sensors angeordnet sind, so dass flexible Verbindungsbahnen 26 entstehen (siehe Fig. 2), innerhalb derer die aktiven Bereiche 18 des Sitzbelegungssensors 10 angeordnet sind und innerhalb derer die elektrischen Anschlussleitungen für die aktiven Bereiche verlaufen.

Bei dem vorliegenden Sitzbelegungssensor ist auf der Außenseite der Trägerfolie 12 ein Heizleiter 28 aufgebracht, der sich entlang der flexiblen Verbindungsbahnen des Sensors erstreckt. Der Verlauf des Heizleiters folgt dabei vorteilhaft den Verbindungsbahnen derart, dass eine gute Flächendeckung des Heizleiters 28 erreicht wird. Die beiden Enden 30 des durchgehenden Heizleiters 28 erstrecken sich dabei vorzugsweise bis zu einer Anschlussfahne 32, die auch die elektrischen Anschlüsse der Kontaktanordnungen der aktiven Bereiche des Sitzbelegungssensors aufnimmt. Hierdurch wird ein Anschließen des Heizleiters an eine Heizstromquelle und ein Anschließen der Kontaktanordnungen an eine Auswerteelektronik mittels eines einzigen Steckerelementes ermöglicht.

Der Heizleiter 28 ist direkt auf die Trägerfolie 12 aufgebracht; er kann zum Beispiel mittels eines Siebdruckverfahrens auf die Trägerfolie 12 aufgebracht werden. In diesem Fall weist der Heizleiter beispielsweise eine Halbleitertinte auf.

Es ist anzumerken, dass der Heizleiter nach dem Aufbringen auf die Trägerfolie 12 vorzugsweise mit einer (nicht dargestellten) Schutzschicht abgedeckt wird. Diese Schutzschicht kann vorteilhaft eine Kunststofffolie umfassen oder alternativ eine Vliesstofflage, die auf die Trägerfolie 12 aufgeklebt werden kann.

Falls die Sensormatte zur einfachen Erkennung einer Sitzbelegung oder zur Klassifizierung einer in dem Sitz einsitzenden Person dient, weist diese im allgemeinen aktive Bereiche im Bereich der Seitenwulste des Sitzes und demnach auch flexible Verbindungsbahnen auf, die sich über die Seitenwulste erstrecken. In dem Fall eines einfachen Sitzbelegungssensors, der sich im allgemeinen lediglich über die eigentliche Sitzfläche des Sitzes erstreckt, kann der Sensor zusätzliche flexible Streifen aufweisen, die sich über die Seitenwulste des Sitzes erstrecken. Solche flexiblen Streifen können einfach aus einer Trägerfolie des Sensors mit ausgestanzt werden und sind demnach einfach herzustellen. Der Heizleiter erstreckt sich dann vorteilhaft ebenfalls über diese zusätzlichen Sensorstreifen, so dass auch die Seitenwulste des Sitzes geheizt werden. Es ist anzumerken, dass in den zusätzlichen Streifen keine aktiven Bereiche des Sitzbelegungssensors angeordnet sein müssen. Weiterhin brauchen die flexiblen Streifen nicht aus einen Sandwichaufbau ausgestanzt zu sein sondern es genügt, dass lediglich diejenige Trägerfolie, auf die der Heizleiter aufgebracht wird, derartige Streifen aufweist.

## Patentansprüche

1. Kombiniertes Sensor- und Heizelement (10), umfassend
eine Sensormatte mit mehreren aktiven Bereichen (18), die untereinander durch flexible Verbindungsstreifen verbunden sind, wobei die flexiblen Verbindungsbahnen zwei zusammenlaminierte Trägerfolien (12, 14) umfassen und wobei in den aktiven Bereichen (18) Kontaktanordnungen (22, 24) auf die Innenseiten der Trägerfolien (12, 14) angeordnet sind, und
einen Heizleiter (28),
**dadurch gekennzeichnet, dass** der Heizleiter (28) direkt auf eine Außenseite einer der Trägerfolien (12) der flexiblen Verbindungsstreifen der Sensormatte (10) aufgebracht ist.

2. Kombiniertes Sensor- und Heizelement nach Anspruch 1, **dadurch gekennzeichnet dass** der Heizleiter (28) durch eine Schutzschicht abgedeckt ist.

3. Kombiniertes Sensor- und Heizelement nach Anspruch 2, **dadurch gekennzeichnet dass** die Schutzschicht eine Kunststofffolie aufweist.

4. Kombiniertes Sensor- und Heizelement nach Anspruch 2, **dadurch gekennzeichnet, dass** die Schutzschicht eine Vliesstofflage aufweist.

5. Kombiniertes Sensor- und Heizelement nach einem der Ansprüche 2 bis 4, **dadurch gekennzeichnet dass** die Schutzschicht auf die flexiblen Verbindungsstreifen der Sensormatte auflaminiert ist.

6. Kombiniertes Sensor- und Heizelement nach einem der Ansprüche 1 bis 5, **dadurch gekennzeichnet, dass** der Heizleiter (28) auf die flexiblen Verbindungsstreifen der Sensormatte aufgeklebt ist.

7. Kombiniertes Sensor- und Heizelement nach einem der Ansprüche 1 bis 5, **dadurch gekennzeichnet, dass** der Heizleiter (28) auf die flexiblen Verbindungsstreifen der Sensormatte aufgedruckt ist.

8. Kombiniertes Sensor- und Heizelement nach Anspruch 7, **dadurch gekennzeichnet, dass** der Heizleiter (28) eine Halbleitertinte aufweist.

9. Kombiniertes Sensor- und Heizelement nach einem der vorhergehenden Ansprüche, **dadurch gekennzeichnet, dass** der Heizleiter (28) ein Widerstandsmaterial mit einem positiven Temperaturkoeffizienten aufweist.

10. Kombiniertes Sensor- und Heizelement nach einem der vorhergehenden Ansprüche, **dadurch gekennzeichnet, dass** elektrische Anschlüsse der Sensormatte und elektrische Anschlüsse des Heizleiters (28) an einer gleichen Anschlussfahne des kombinierten Sensor- und Heizelementes (10) angeordnet sind.

11. Kombiniertes Sensor- und Heizelement nach Anspruch 10, **dadurch gekennzeichnet, dass** die Sensormatte und der Heizleiter (28) an eine kombinierte Auswerte- und Versorgungsschaltung anschließbar ist

12. Fahrzeugsitz umfassend ein kombiniertes Sensor- und Heizelement nach einem der Ansprüche 1 bis 11.

## Claims

1. Combined sensor and heating element (10), comprising
a sensor mat having several active regions (18) interconnected by flexible connection strips, the flexible connection lines comprising two carrier foils (12, 14) laminated together and contact arrangements (22, 24) being arranged in the active regions (18) at the inside of the carrier foils (12, 14), and
a heat conductor (28),
**characterized in that** the heat conductor (28) is directly applied onto one outer side of one of the carrier foils (12) of the flexible connection strips of the sensor mat (10):

2. Combined sensor and heating element according to claim 1, **characterized in that** the heat conductor (28) is covered by a protective layer.

3. Combined sensor and heating element according to claim 2, **characterized in that** the protective layer comprises a plastic foil.

4. Combined sensor and heating element according to claim 2, **characterized in that** the protective layer comprises a bonded fabrics layer.

5. Combined sensor and heating element according to one of claims 2 to 4, **characterized in that** the protective layer is laminated onto the flexible connection strips of the sensor mat.

6. Combined sensor and heating element according to one of claims 1 to 5,
**characterized in that** the heat conductor (28) is glued onto the flexible connection strips of the sensor mat.

7. Combined sensor and heating element according to one of claims 1 to 5, **characterized in that** the heat conductor (28) is printed onto the flexible connection strips of the sensor mat.

8. Combined sensor and heating element according to claim 7, **characterized in that** the heat conductor (28) comprises a semiconductor ink.

9. Combined sensor and heating element according to one of the preceding claims, **characterized in that** the heat conductor (28) comprises a high-resistivity material with a positive temperature coefficient.

10. Combined sensor and heating element according to one of the preceding claims, **characterized in that** electric connections of the sensor mat and electric connections of the heat conductor (28) are arranged at a common terminal lug of the combined sensor and heating element (10).

11. Combined sensor and heating element according to claim 10, **characterized in that** the sensor mat and the heat conductor (28) can be connected to a combined evaluation and supply circuit.

12. Vehicle seat comprising a combined sensor and heating element according to one of claims 1 to 11.

## Revendications

1. Elément détecteur et chauffant mixte (10), comprenant
une natte de détection avec plusieurs régions actives (18), reliées entre elles par des bandes de liaison flexibles, les bandes de liaison flexibles comprenant deux films supports (12, 14) assemblés par laminage et des agencements de contact (22, 24) étant disposés dans les régions actives (18), sur la face interne des films supports (12, 14)
et un conducteur chauffant (28)
**caractérisé en ce que** le conducteur chauffant (28) est directement appliqué sur une face externe de l'un des films supports (12) des bandes de liaison flexibles de la natte de détection (10).

2. Elément détecteur et chauffant mixte selon la revendication 1, **caractérisé en ce que** le conducteur chauffant (28) est recouvert d'une couche de protection.

3. Elément détecteur et chauffant mixte selon la revendication 2, **caractérisé en ce que** la couche de protection est un film en matière plastique.

4. Elément détecteur et chauffant mixte selon la revendication 2, **caractérisé en ce que** la couche de protection présente une couche de non-tissé.

5. Elément détecteur et chauffant mixte selon l'une quelconque des revendications 2 à 4, **caractérisé en ce que** la couche de protection est fixée par laminage sur les bandes de liaison flexibles de la natte de détection.

6. Elément détecteur et chauffant mixte selon l'une quelconque des revendications 1 à 5, **caractérisé en ce que** le conducteur chauffant (28) est collé sur les bandes de liaison flexibles de la natte de détection.

7. Elément détecteur et chauffant mixte selon l'une quelconque des revendications 1 à 5, **caractérisé en ce que** le conducteur chauffant (28) est imprimé sur les bandes de liaison flexibles de la natte de détection.

8. Elément détecteur et chauffant mixte selon la revendication 7, **caractérisé en ce que** le conducteur chauffant (28) est muni d'encre semi-conductrice:

9. Elément détecteur et chauffant mixte selon l'une quelconque des revendications précédentes, **caractérisé en ce que** le conducteur chauffant (28) est muni d'un matériau résistif avec un coefficient thermique positif.

10. Elément détecteur et chauffant mixte selon l'une quelconque des revendications précédentes, **caractérisé en ce que** des branchements électriques de la natte de détection et des branchements électriques du conducteur chauffant (28) sont disposés sur une même barrette de l'élément détecteur et chauffant mixte (10).

11. Elément détecteur et chauffant mixte selon la revendication 10, **caractérisé en ce que** la natte de détection et le conducteur chauffant (28) sont raccordables sur un circuit mixte d'évaluation et d'alimentation.

12. Siège pour véhicule comprenant un élément détecteur et chauffant mixte selon l'une quelconque des revendications 1 à 11.
